# EUROPÄISCHE PATENTSCHRIFT

(11) **EP 2 208 642 B1**
(45) Veröffentlichungstag und Bekanntmachung des Hinweises auf die Patenterteilung: **12.10.2011**
(21) Anmeldenummer: 09075020.9
(22) Anmeldetag: 14.01.2009
(51) Int. Cl.: B60R 1/072, B60R 1/066

(54) **Antrieb für ein zu verstellendes Bauteil**
Drive for a component to be adjusted
Entraînement pour un composant qui est à ajuster

(43) Veröffentlichungstag der Anmeldung: 21.07.2010
(73) Patentinhaber: Magna Auteca AG, 8160 Krottendorf/Weiz (AT)
(72) Erfinder: Schadler, Bernhard, A-8261 Sinabelkirchen (AT); Dornhofer, Hermann, A-8190 Birkfeld (AT)
(74) Vertreter: Pfenning, Meinig & Partner GbR

(56) Entgegenhaltungen:
- EP-A- 1 495 912
- EP-A- 1 808 334
- DE-U1-202005 018 289

## Beschreibung

Die Erfindung betrifft einen Antrieb für ein zu verstellendes Bauteil, insbesondere für einen verstellbaren Kraftfahrzeugspiegel nach dem Oberbegriff des Hauptanspruchs.

Es ist eine Vielzahl von Antrieben für ein zu verstellendes Bauteil, insbesondere für den Kraftfahrzeugbereich, bekannt, wobei die zu verstellenden Bauteile Spiegel, Klappen für Lüftungen und Heizungen oder dergleichen sind. Eine Antriebsvorrichtung für einen verstellbaren Rückblickspiegel ist beispielsweise aus der WO 98/31565 bekannt. Dabei ist ein fahrzeugfestes Antriebsgehäuse in Schalenform vorgesehen, das Motoren und Getriebeelemente, wie Zahnräder oder Schnecken, aufnimmt. Das Gehäuse bildet mit seiner Außenfläche eine sphärische Führungsfläche für ein das Gehäuse zumindest teilweise umgreifendes Element, das mit einem Spiegelträger verbunden ist, der zur Verstellung des Rückblickspiegels um zwei gedachte Achsen schwenkbar ist und an dem ein Spiegelglas befestigt ist. In dem das Gehäuse zumindest teilweise umgreifenden Element ist mindestens eine Verzahnung, vorzugsweise zwei Verzahnungen vorgesehen, wobei von Elektromotoren über Getriebeelemente angetriebene Zahnräder das Gehäuse durchgreifen und zur Verstellung des mit dem Spiegelträger verbundenen umgreifenden Elements mit dessen Verzahnungen in Eingriff treten.

Üblicherweise ist das Material für die Gehäuse der bekannten Antriebe Kunststoff, d.h. im Falle des bekannten beschriebenen Antriebs, besteht sowohl das eine schalenförmige Außenfläche aufweisende Gehäuse als auch das diese Außenfläche umgreifende Element aus Kunststoff. Es ist jedoch bekannt, dass Kunststoffmaterial mit der Zeit nachgibt und bei warmen Temperaturen zum Kriechverhalten neigt, dadurch verändert sich das Spiel zwischen den zu bewegenden Kunststoffteilen, was zu Vibrationen am Spiegelglas und zu Ungenauigkeiten bei der Einstellung führt.

Aus der DE 20 2005 018 289 ist eine Spiegeleinstelleinrichtung bekannt, die ein Basisteil mit einem Spiegelträger aufweist, der in Bezug auf das Basisteil schwenkbar gelagert ist. Das Basisteil weist an seinem Umfang angeformte Kunststoffelemente auf, die als Kontaktteil mit einer Kunststoffkontaktbahn des Spiegelträgers unter Ausübung einer Federkraft zusammenwirken. Zusätzlich sind eine oder mehrere Hilfsfedern vorgesehen, wobei in einem Ausführungsbeispiel die Hilfsfeder als Drahtstück mit hakenförmigen Enden ausgebildet ist, das den Umfang des Basisteils umgibt. Die Hilfsfeder übt somit eine radial nach außen gerichtete Federkraft auf die Kunststoffkontaktteile aus. Um den Umfang des Basisteils herum sind mehrere Drahtstücke bzw. Hilfsfedern angeordnet. In einem anderen Ausführungsbeispiel ist die Hilfsfeder als Blattfeder in Form eines Streifens aus Federstahl gestaltet, im Wesentlichen V-förmig, und jeweils zwischen die Kontaktteile und einer Umfangswand des Basisteils angeordnet. Eine derartige bekannte Anordnung ist konstruktiv aufwendig, da mehrere Hilfsfedern vorgesehen sind, die an dem Basisteil angebracht werden müssen. Darüber hinaus kann die Federkraft der einzelnen Federn variieren, so dass kein gleichmäßiges Reitmoment über den Umfang des Basisteils auf die Kontaktbahn des Spiegelträgers ausgeübt wird.

Eine weitere Spiegeleinstelleinrichtung ist aus der Druckschrift EP 1 808 334 A1 bekannt. Die dort offenbarte Einrichtung weist ein Gehäuse zur Aufnahme von Antriebselementen und ein in das Gehäuse eingreifendes Element auf. Das in das Gehäuse eingreifende Element ist gegenüber dem Gehäuse elastisch vorgespannt. An dem in das Gehäuse eingreifende Element ist eine Auskragung angebracht, die das Gehäuse bei verkippten Spiegel am Rand umgreift.

Ausgehend von dem bekannten Stand der Technik liegt der Erfindung die Aufgabe zugrunde, einen Antrieb für ein an einer feststehenden Struktur zu verstellendes Bauteil, insbesondere für einen verstellbaren Kraftfahrzeugspiegel zu schaffen, der ein konstantes Reibmoment über die gesamte Lebensdauer des Antriebs zwischen dem die Antriebselemente aufnehmenden Gehäuse und dem das Gehäuse zumindest teilweise umgreifenden Element sicherstellt, wobei dafür vorgesehene Mittel konstruktiv einfach sein sollen und leicht zu installieren sind.

Diese Aufgabe wird erfindungsgemäß durch die kennzeichnenden Merkmale des Hauptanspruchs in Verbindung mit den Merkmalen des Oberbegriffs gelöst.

Durch die in den Unteransprüchen angegebenen Maßnahmen sind vorteilhafte Weiterbildungen und Verbesserungen möglich.

Dadurch, dass Mittel zur elastischen Vorspannung zwischen Gehäuse und umgreifendem Element vorgesehen sind, die ein um eine Mittelachse des Gehäuses herum angeordnetes Ausgleichselement aufweisen, wobei das Ausgleichselement unter der Wirkung von einer Federkraft axial zur Ausübung eines Drucks auf den Träger und damit auf das das Gehäuse umgreifende Element bewegbar ist, kann ein konstantes Reibmoment über die Lebensdauer des Antriebs zur Verfügung gestellt werden, da das durch eine mögliche Relaxation des Kunststoffs auftretende Spiel durch Verschiebung des Ausgleichselements und damit durch axiale Verschiebung des Trägers zusammen mit dem umgreifenden Element ausgeglichen wird. Da die Federkraft axial wirkt, ergibt sich eine definierte und gleichmäßige Reibung zwischen Gehäuse und übergreifendem Element.

Zur Ausübung der Federkraft sind zwischen Ausgleichselement und Gehäuse mindestens zwei axial zur Mittelachse des Gehäuses wirkende Federn angeordnet, die bevorzugt als Spiralfedern ausgebildet sind. Durch eine derartige Anordnung kann die axiale Kraft, die das umgreifende Element mit dem Spiegelträger in der Zeichnung gesehen nach oben drückt, in einfacher Weise erzeugt werden.

Die Federn sind symmetrisch zur Mittelachse angeordnet, wodurch die Kräfte gleichmäßig auf die Ausgleichsplatte gerichtet werden.

In einem bevorzugten Ausführungsbeispiel besteht das Gehäuse aus einem schalenförmigen Untergehäuse, dessen Außenfläche die Kontaktfläche mit dem ringförmigen, eine Teilschale bildenden umgreifenden Element darstellt, und einem deckelartigen Obergehäuse, wobei das Ausgleichselement in einer mittigen Vertiefung des Obergehäuses aufgenommen ist. Dadurch wird eine einfache Konstruktion zur Verfügung gestellt.

Für eine Zentrierung des Ausgleichselements in Bezug auf das Gehäuse sind Mittel zum Zentrieren vorgesehen, die beispielsweise als in dem Gehäuse mittig angeordnete stiftartige Hülse zur Aufnahme eines Befestigungselements ausgebildet sind. Auf diese Weise kann die Ausgleichsplatte, die eine mittige Öffnung aufweist, sauber auf die Mittelachse ausgerichtet werden.

In einem bevorzugten Ausführungsbeispiel sind an dem Ausgleichselement Stifte für die Zentrierung der Federn angeformt. Durch diese Mittel werden einerseits die Kräfte gleichmäßig auf die Ausgleichsplatte gerichtet und die Federn werden sauber axial geführt, so dass keine Verkantung zwischen dem Gehäuse und dem umgreifenden Element auftreten und die definierte Reibung zwischen den besagten Teilen gewährleistet.

Das Ausgleichselement kann plattenförmig ausgebildet sein, mit den angeformten Stiften zur Zentrierung der Federn, wobei vorzugsweise das plattenförmige Element gekrümmt ist oder zwei prismaähnliche Flächen aufweist. Diese Ausführung ist besonders vorteilhaft, da das Ausgleichselement Bestandteil einer Drehlageranordnung für den Träger ist. Dazu weist der als Platte ausgebildete Träger mittig einen angeformten Teilzylinder auf, wobei zwischen Teilzylinder des Trägers und dem Ausgleichselement ein Verdrehsicherungselement angeordnet ist, dessen dem Teilzylinder zugewandte Lagerfläche für denselben zwei prismaähnliche Flächen umfasst und dessen dem Ausgleichselement zugewandte Fläche als teilzylinderförmige Gleitfläche ausgebildet ist. Auf diese Weise Zylinder-Prismaführung gebildet, bei der die jeweiligen teilzylindrischen Flächen der Trägerplatte und des Verdrehsicherungselements auf den prismatischen Flächen eine linienförmige Abstützung haben. Dadurch ergibt sich ein Toleranzausgleich in der verdrehsicheren Lagerung und es wird möglich, fertigungsbedingte Mittigkeitsfehler auszugleichen. Dadurch entsteht ein gleichmäßiger Kontakt zwischen der Außenfläche des Gehäuses und der Innenfläche des umgreifenden Elements.

In einem bevorzugten Ausführungsbeispiel weist die stiftartige Hülse, die mittig im Gehäuse angeordnet ist und die Teile der Lagerung mit doppelter Zylinder-Prismaführung durchgreift, einen tellerartigen Ansatz auf, der sich gegen das Gehäuse abstützt. Durch diesen tellerfederartigen Ansatz wird die nach dem Verschrauben des Antriebs mit der feststehenden Struktur entstehende Vorspannkraft auf die Innenseite bzw. den Boden des Gehäuses verteilt und damit auf die Auflagepunkte. Dadurch wird eine sichere gleichmäßige Abstützung des Antriebs über die Lebensdauer erreicht.

Ein Ausführungsbeispiel der Erfindung ist in der Zeichnung dargestellt und wird in der nachfolgenden Beschreibung näher erläutert. Es zeigen
- Fig. 1: einen Schnitt durch den erfindungsgemäßen Antrieb und
- Fig. 2: eine schematische Darstellung der bei dem erfindungsgemäßen Ausführungsbeispiel ver- wendeten Drehlagerung mit Verdrehsicherung und doppelter Zylinder-Prismaführung.

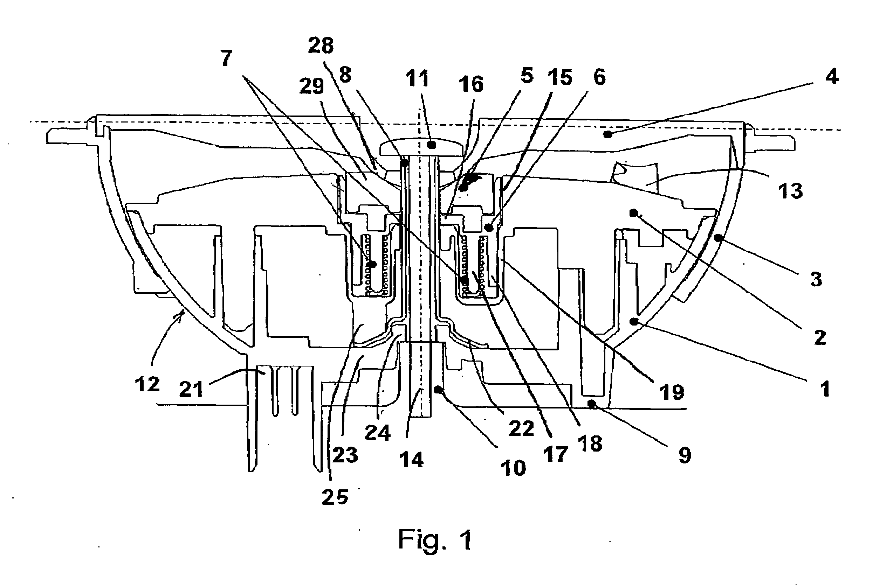

Der in Fig. 1 dargestellte Antrieb entsprechend der Erfindung weist ein schalenförmiges Untergehäuse 1 und ein mit dem Untergehäuse 1 beispielsweise über Rast- und/oder Clipverbindungen verbundenes Obergehäuse auf, das das Untergehäuse deckelartig abschließt. In dem so gebildeten Gehäuse 12 sind Antriebselemente untergebracht, wie z.B. Elektromotoren, Getriebeschnecken und Zahnräder.

Das schalenförmige Gehäuse 12 aus Untergehäuse 1 und Obergehäuse 2 wird von einer ringförmigen Antriebsschale 3 übergriffen, die mit einer Trägerplatte 4 verbunden ist, wobei die Verbindungen wiederum Rast- und Schnappverbindungen sein können. Unter ringförmiger Antriebsschale wird verstanden, dass das Untergehäuse 1 nur bereichsweise übergriffen wird, wie aus Fig. 1 gut zu erkennen ist. Die Innenfläche der Antriebsschale gleitet auf der Außenfläche des schalenförmigen Untergehäuses, wodurch die Trägerplatte 4 geschwenkt wird. An der Träger- oder Adapterplatte 4 wird im bevorzugten Ausführungsbeispiel ein Spiegelelement eines Rückblickspiegels für Kraftfahrzeuge befestigt. Auf der Innenseite der Antriebsschale 3 ist im dargestellten Ausführungsbeispiele eine Verzahnung 13 angedeutet, die mit einem nicht dargestellten Antriebszahnrad in Eingriff steht, das das Untergehäuses durchgreift und über Getriebeelemente von einem Elektromotor (nicht dargestellt) angetrieben wird. Eine weitere Verzahnung 13 ist etwa 90° zu der dargestellten Verzahnung 13 angeordnet und steht mit einem nicht dargestellten weiteren Antriebszahnrad in Verbindung. Dadurch lässt sich die Trägerplatte 4 in alle Richtungen schwenken.

In dem Obergehäuse 2 ist um eine Mittelachse 14 des Antriebs herum eine Vertiefung 15 vorgesehen, in die ein Ausgleichselement 6 eingesetzt ist. Das Ausgleichselement 6 umfasst ein plattenförmiges Teil 16, an das zwei in die Vertiefung 15 hineinragende Stifte 17 und zwei Führungen 18 angeformt sind. Das plattenförmige Oberteil 16 und auch die Vertiefung 15 haben einen viereckigen Umriss. Die Vertiefung 15 setzt sich in angeformten Hohlansätzen 19 fort, die zur Aufnahme der Stifte 17 und der Führungen 18 dienen. Zwischen dem Boden dieser Hohlansätze 19 und dem plattenförmigen Oberteil 16 des Ausgleichselements 6 sind um die Stifte 17 herum Spiralfedern 7 unter Vorspannung eingesetzt. Diese Federn 7 drücken somit das Ausgleichselement 6 in der Fig. 1 nach oben.

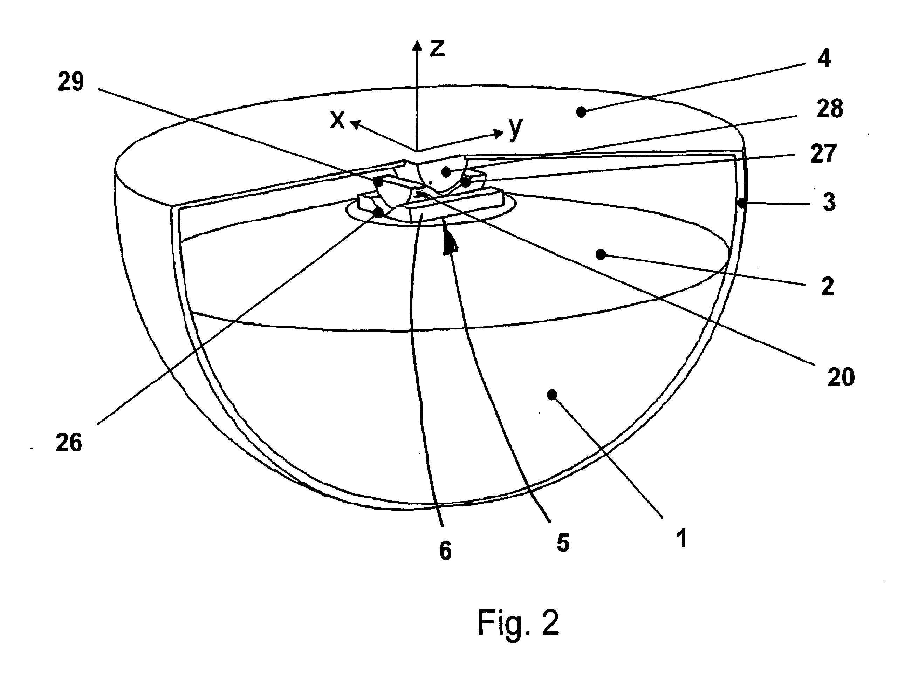

Die Drehachse des Antriebs, beispielsweise eines Spiegelverstellantriebs, wird durch die Kugelfläche an der Antriebsschale 3 und durch die Kugelfläche am Untergehäuse bestimmt. Dabei schwenkt die Antriebsschale 3 mit Trägerplatte 4 um eine Lagerung 5 mit Verdrehsicherung, die mit Hilfe von Fig. 2 näher erläutert wird. In dieser Fig. 2 sind das Untergehäuse 1 und das Obergehäuse 2 sowie die Antriebsschale 3 mit der Trägerplatte 4 schematisch dargestellt und dienen in dieser Form der Erläuterung der Lagerung 5. Ein Koordinatensystem ist in bekannter Weise mit x, y und z bezeichnet. Das Ausgleichselement 6, von dem hier schematisch ein Teil des Oberteils zu sehen ist, weist eine Prismaführung 26 aus zwei schrägen Flächen auf, auf denen ein Verdrehsicherungselement oder Zwischenelement 20 aufliegt. Dieses Zwischenelement 20 ist auf der dem Ausgleichselement 6 zugewandten Seite mit einer Teilzylinderfläche 29 versehen, die auch in einzelnen Kufen, wie in Fig. 1 dargestellt, ausgebildet sein kann. An der Trägerplatte 4 ist gleichfalls ein Teilzylinder 28 angeformt, wie er im Schnitt auch in Fig. 1 zu erkennen ist. Dieser Teilzylinder wird von dem Zwischenelement 20 aufgenommen, das auf der dem Teilzylinder 28 zugewandten Seite eine Prismaführung 27 bestehend aus zwei Schrägen aufweist. Aufgrund dieser Anordnung der Lagerung können bei fertigungsbedingten Mittigkeitsfehlern, d.h. bei einer Nichtzentrizität, das Zwischenelement eine lineare Bewegung in y-Richtung vornehmen und der Zylinder 28 in der Prismenführung 27 eine lineare Bewegung in x-Richtung ausführen. Auf diese Weise findet ein Toleranzausgleich statt. Durch die doppelte Zylinder-Prismaführung 26, 27, 28, 29 findet beim Schwenken der Antriebsschale 3 und der Trägerplatte 4 um die x-Achse und die y-Achse jeweils eine Linienberührung zwischen den schrägen Flächen der Prismenführungen 26 und 27 und den zugeordneten Teilzylindern 28 und 29 statt.

Wie in Fig. 1 zu erkennen ist, wird der Antrieb an einer feststehenden Struktur, beispielsweise einem mit dem Kraftfahrzeug verbundenen Teil eines Spiegelträgerteils, befestigt, wobei eine Steckbuchse 21 des Antriebs mit einem entsprechenden Stecker einer elektrischen Leitung verbunden wird. Üblicherweise wird der Antrieb mittels einer Befestigungsschraube 11 mit der feststehenden Struktur 10 verschraubt, derart, dass das Untergehäuse mit Auflagepunkten 9 sich an der feststehenden Struktur 10 abstützt. Um eine sichere Abstützung des Antriebs über die gesamte Lebensdauer zu erreichen, ist, wie aus Fig. 1 zu erkennen ist, eine Hülse 8 in dem Gehäuse 12 um die Mittelachse 14 herum aufgenommen. Die Hülse 8 weist an einem Ende einen tellerfederartigen Ansatz 22 auf, der sich am Boden 23 des Untergehäuses 1 abstützt, wobei dieser Boden eine nach innen gezogene Erhöhung 24 aufweist, die in den tellerfederartigen Ansatz 22 eingreift und die um eine Öffnung im Boden 23 für den Durchgriff der Befestigungsschraube 11 angeordnet ist. Eine Verlängerung 25 der hohlzylindrischen Vertiefung 19 drückt dabei von oben (entsprechend Fig. 1) auf den Teller 22. Die Hülse 8 durchgreift die Teile der Lagerung 5 und ragt in eine Vertiefung der Trägerplatte 4 hinein, die ausgebildet ist, um das Schwenken der Trägerplatte 4 zusammen mit der Antriebsschale 3 zuzulassen. Zum Einschrauben der Befestigungsschraube 11 in die feststehende Struktur 10 wird die Schraube 11 durch die Hülse 8 geführt und beim Festziehen wird der tellerförmige Ansatz gegen den Boden 23 und die Erhöhung 24 gedrückt, so dass im Wesentlichen die Luft zwischen diesen Teilen eliminiert und der Boden unter Spannung gehalten wird. Dadurch wird die Vorspannkraft auf die Auflagepunkte 9 verteilt, so dass die Schraube sich auch über die Lebensdauer nicht lockern kann und der Antrieb fest auf der feststehenden Struktur sitzt.

Wenn im Laufe der Lebensdauer des Antriebs der Kunststoff einer Relaxation unterliegt, durch die ein Spiel zwischen dem Untergehäuse 1, d.h. zwischen seiner äußeren Kugelfläche und der Antriebsschale 3, d.h. ihrer inneren Kugelfläche, auftreten könnte, drücken die Spiralfedern 7 das Ausgleichselement 6 in der Fig. 1 nach oben, wodurch auch die Teile der Lagerung 5 und damit die Trägerplatte 4 zusammen mit der Antriebsschale nach oben gedrückt werden, so dass die Antriebsschale 3 immer an dem Untergehäuse 1 anliegt und sich eine definierte Reibung zwischen Untergehäuse 1 und Antriebsschale 3 ergibt. Durch die axiale Federkraft der Spiralfedern 7 und dem Ausgleichselement 6 wird somit die Antriebsschale 3 gleichmäßig über den gesamten Umfang gegen das untere Gehäuse 1 spielfrei gehalten.

## Patentansprüche

1. Antrieb für ein zu verstellendes Bauteil, insbesondere für einen verstellbaren Kraftfahrzeugspiegel, mit einem an einer feststehenden Struktur (10) befestigbaren Gehäuse (12) zur Aufnahme von Antriebselementen und mit einem das Gehäuse (12) zumindest teilweise umgreifenden Element (3), das mit einem Träger (4) für das Bauteil verbunden ist, wobei das umgreifende Element (3) mit dem Träger (4) relativ zu dem Gehäuse (12) schwenkbar angeordnet ist und,
**dadurch gekennzeichnet,**
**dass** Mittel zur elastischen Vorspannung zwischen Gehäuse (12) und umgreifendem Element (3) vorgesehen sind, wobei die Mittel (6, 7) zur elastischen Vorspannung ein um eine Mittelachse (14) des Gehäuses (12) herum angeordnetes Ausgleichselement (6) aufweisen, wobei das Ausgleichselement (6) unter der Wirkung einer Federkraft axial zur Ausübung eines Drucks auf den Träger (4) und damit auf das das Gehäuse (12) umgreifende Element (3) bewegbar ist, wobei zwischen Ausgleichselement (6) und Gehäuse (12) mindestens zwei axial zur Mittelachse des Gehäuses wirkende, symmetrisch zur Mittelachse angeordnete Federn (7) angeordnet sind.

2. Antrieb nach Anspruch 1, **dadurch gekennzeichnet, dass** das Gehäuse aus einem schalenförmigen Untergehäuse (1) und einem deckelartigen Obergehäuse (2) besteht, wobei das Ausgleichselement (6) in einer mittigen Vertiefung (15) des Obergehäuses (2) aufgenommen ist.

3. Antrieb nach einem der Ansprüche 1 oder 2, **dadurch gekennzeichnet, dass** dem Ausgleichselement (6) Mittel zu seiner Zentrierung in Bezug auf das Gehäuse (12) zugeordnet sind.

4. Antrieb nach einem der Ansprüche 1 bis 3, **dadurch gekennzeichnet, dass** in dem Gehäuse (12) um die Mittelachse (14) herum eine stiftartige Hülse (8) zur Aufnahme einer Befestigungsschraube angeordnet ist.

5. Antrieb nach Anspruch 3 oder Anspruch 4, **dadurch gekennzeichnet, dass** das Ausgleichselement (6) eine Öffnung für den Durchgriff der stiftartigen Hülse (8) aufweist.

6. Antrieb nach einem der Ansprüche 1 bis 5, **dadurch gekennzeichnet, dass** die mindestens zwei Federn (7) als Spiralfedern ausgebildet sind.

7. Antrieb nach einem der Ansprüche 1 bis 6, **dadurch gekennzeichnet, dass** das Ausgleichselement (6) plattenartig ausgebildet ist.

8. Antrieb nach einem der Ansprüche 1 bis 7, **dadurch gekennzeichnet, dass** das Ausgleichselement (6) eine Führung (26), vorzugsweise eine Prismaführung aus zwei prismaähnlichen Flächen oder eine gekrümmte Fläche, vorzugsweise eine Teilzylinderfläche aufweist.

9. Antrieb nach Anspruch 8, **dadurch gekennzeichnet, dass** der Träger (4) als Trägerplatte, vorzugsweise zur Befestigung eines Spiegels ausgebildet ist und dass an die Trägerplatte mittig ein Teilzylinder (28) angeformt ist.

10. Antrieb nach Anspruch 8 und Anspruch 9, **dadurch gekennzeichnet, dass** zwischen Teilzylinder (28) der Trägerplatte (4) und Ausgleichselement (6) ein Verdrehsicherungselement (20) angeordnet ist, das eine dem Teilzylinder (28) zugewandte Führung (27) aus prismaähnlichen Flächen oder gekrümmten Lagerflächen und eine dem Ausgleichselement (6) zugewandte teilzylinderförmige Gleitfläche (29) aufweist.

11. Antrieb nach Anspruch 10, **dadurch gekennzeichnet, dass** Ausgleichselement (6), Verdrehsicherungselement (20) und Teilzylinder (28) der Trägerplatte (4) ein Drehlager für die Trägerplatte (4) und das übergreifende Element (3) mit doppelter Zylinder-Prismaführung bilden.

12. Antrieb nach einem der Ansprüche 4 bis 11, **dadurch gekennzeichnet, dass** die stiftartige Hülse (8) einen tellerfederartigen Ansatz (22) aufweist, der sich gegen das Gehäuse (12) abstützt.

13. Antrieb nach Anspruch 12, **dadurch gekennzeichnet, dass** der tellerfederartige Ansatz (22) sich am Boden (23) des Untergehäuses (1) abstützt und mindestens ein am Obergehäuse (2) angeformter Ansatz (24) einen Anschlag zum Niederhalten des tellerartigen Ansatzes (22) bildet.

14. Antrieb nach einem der vorangehenden Ansprüche, **dadurch gekennzeichnet, dass** an dem Ausgleichselement (6) Stifte (17) für die Zentrierung der Federn (7) angeordnet sind.

## Claims

1. Drive for a component to be adjusted, in particular for an adjustable automotive vehicle mirror, having a housing (12) which can be mounted on a stationary structure (10) for receiving drive elements, and having an element which encompasses the housing (12) at least partially and is connected to a carrier (4) for the component, the encompassing element (3) with the carrier (4) being disposed pivotably relative to the housing (12) and
***characterised in that***
means for elastic pretension between housing (12) and encompassing element (3) are provided, the means (6, 7) for elastic pretension have a compensating element (6) which is disposed about a central axis (14) of the housing (12), the compensating element (6) being moveable axially under the effect of a spring force in order to exert a pressure on the carrier (4) and hence on the element (3) encompassing the housing (12), at least two springs (7) which act axially relative to the central axis of the housing being disposed symmetrically between the compensating element (6) and the housing (12).

2. Drive according to claim 1, **characterised in that** the housing consists of a shell-shaped lower housing (1) and a cover-like upper housing (2), the compensating element (6) being received in a central recess (15) of the upper housing (2).

3. Drive according to one of the claims 1 or 2, **characterised in that** means are assigned to the compensating element (6) for centring thereof relative to the housing (12).

4. Drive according to one of the claims 1 to 3, **characterised in that**, in the housing (12), a pin-like sleeve (8) for receiving a mounting screw is disposed around the central axis (14).

5. Drive according to claim 3 or claim 4, **characterised in that** the compensating element (6) has an opening for penetration of the pin-like sleeve (8).

6. Drive according to one of the claims 1 to 5, **characterised in that** the at least two springs (7) are spiral springs.

7. Drive according to one of the claims 1 to 6, **characterised in that** the compensating element (6) has a plate-like configuration.

8. Drive according to one of the claims 1 to 7, **characterised in that** the compensating element (6) has a guide (26), preferably a V-guide comprising two prism-like faces or a curved face, preferably a partial cylinder face.

9. Drive according to claim 8, **characterised in that** the carrier (4) is configured as a carrier plate, preferably for mounting a mirror and **in that** a partial cylinder (28) is moulded centrally on the carrier plate.

10. Drive according to claim 8 and claim 9, **characterised in that** an anti-rotation element (20) is disposed between the partial cylinder (28) of the carrier plate (4) and the compensating element (6), which element has a guide (27), which is orientated towards the partial cylinder (28) and comprises prism-like faces or curved bearing faces, and a partial cylindrical sliding face (29) orientated towards the compensating element (6).

11. Drive according to claim 10, **characterised in that** the compensating element (6), anti-rotation element (20) and partial cylinder (28) of the carrier plate (4) form a rotary bearing for the carrier plate (4) and the covering element (3) with the double cylinder V-guide.

12. Drive according to one of the claims 4 to 11, **characterised in that** the pin-like sleeve (8) has a plate spring-like projection (22) which is supported against the housing (12).

13. Drive according to claim 12, **characterised in that** the plate spring-like projection (22) is supported on the base (23) of the lower housing (1) and at least one projection (24) moulded on the upper housing (2) forms a limit stop for holding down the plate-like projection (22).

14. Drive according to one of the preceding claims, **characterised in that** pins (17) for centring the springs (7) are disposed on the compensating element (6).

## Revendications

1. Système d'entraînement pour une pièce à ajuster, en particulier pour un rétroviseur de véhicule automobile réglable, comprenant un boîtier (12) qui peut être fixé sur une structure fixe (10) pour recevoir des éléments d'entraînement et un élément (3) enveloppant au moins partiellement le boîtier (12), qui est relié à un support (4) de la pièce, dans lequel l'élément enveloppant (3) est agencé de manière pivotante avec le support (4) par rapport au boîtier (12),
**caractérisé en ce qu'**il comprend des moyens de précontrainte élastique entre le boîtier (12) et l'élément enveloppant (3), dans lequel les moyens de précontrainte élastique (6, 7) présentent un élément de compensation (6) agencé autour d'un axe central (14) du boîtier (12), dans lequel l'élément de compensation (6) peut être déplacé sous l'effet d'une force élastique axialement pour exercer une pression sur le support (4) et sur l'élément (3) enveloppant le boîtier (12), dans lequel on agence entre l'élément de compensation (6) et le boîtier (12) au moins deux ressorts (7) agencés symétriquement à par rapport l'axe central et agissant axialement par rapport à l'axe central du boîtier.

2. Système d'entraînement selon la revendication 1, **caractérisé en ce que** le boîtier est constitué d'un boîtier inférieur (1) en forme de coque et d'un boîtier supérieur (2) en forme de couvercle, dans lequel l'élément de compensation (6) est agencé dans un évidement central (15) du boîtier supérieur (2).

3. Système d'entraînement selon la revendication 1 ou 2, **caractérisé en ce que** l'élément de compensation (6) comprend des moyens pour son centrage par rapport au boîtier (12).

4. Système d'entraînement selon l'une quelconque des revendications 1 à 3, **caractérisé en ce que**, dans le boîtier (12), autour de l'axe central (14), un manchon de type goupille (8) est agencé pour recevoir une vis de fixation.

5. Système d'entraînement selon la revendication 3 ou 4, **caractérisé en ce que** l'élément de compensation (6) comprend une ouverture pour le passage du manchon (8) de type goupille.

6. Système d'entraînement selon l'une quelconque des revendications 1 à 5, **caractérisé en ce que** les au moins deux ressorts (7) sont des ressorts à spirale.

7. Système d'entraînement selon l'une quelconque des revendications 1 à 6, **caractérisé en ce que** l'élément de compensation (6) comporte une plaque.

8. Système d'entraînement selon l'une quelconque des revendications 1 à 7, **caractérisé en ce que** l'élément de compensation (6) comprend un guide (26), de préférence un guide prismatique constitué de deux surfaces semblables à un prisme ou une surface incurvée, de préférence une surface cylindrique partielle.

9. Système d'entraînement selon la revendication 8, **caractérisé en ce que** le support (4) comprend une plaque de support, de préférence pour fixer un rétroviseur et **en ce qu'**un cylindre partiel (28) est moulé au centre de la plaque de support.

10. Système d'entraînement selon la revendication 8 et la revendication 9, **caractérisé en ce qu'**entre le cylindre partiel (28) de la plaque de support (4) et l'élément de compensation (6), un élément antigiratoire (20) est agencé, présentant un guide (27) tourné vers le cylindre partiel (28) et formé de surfaces semblables à des prismes ou de surfaces de palier incurvées et d'une surface de glissement (29) en forme de cylindre partiel tournée vers l'élément de compensation (6).

11. Système d'entraînement selon la revendication 10, **caractérisé en ce que** l'élément de compensation (6), l'élément antigiratoire (20) et le cylindre partiel (28) de la plaque de support (4) forment un palier de rotation pour la plaque de support (4) et l'élément enveloppant (3) avec un guide prismatique à double cylindre.

12. Système d'entraînement selon l'une quelconque des revendications 4 à 11, **caractérisé en ce que** le manchon de type goupille (8) présente une saillie (22) du type à ressort à disque qui s'appuie contre le boîtier (12).

13. Système d'entraînement selon la revendication 12, **caractérisé en ce que** la saillie (22) du type à ressort à disque s'appuie sur le fond (23) du boîtier inférieur (1) et au moins une saillie (24) moulée sur le boîtier supérieur (2) forme une butée pour retenir la saillie (22) du type à ressort.

14. Système d'entraînement selon l'une quelconque des revendications précédentes, **caractérisé en ce que** des tiges (17) pour le centrage des ressorts (7) sont agencés sur l'élément de compensation (6).
